# EUROPÄISCHE PATENTSCHRIFT

(11) **EP 0 652 070 B1**
(45) Veröffentlichungstag und Bekanntmachung des Hinweises auf die Patenterteilung: **10.07.1996**
(21) Anmeldenummer: 94117133.2
(22) Anmeldetag: 29.10.1994
(51) Int. Cl.: B23K 11/31

(54) **Schweisszange**
Welding gun
Pince de soudage

(30) Priorität: 09.11.1993 DE 9317076 U
(43) Veröffentlichungstag der Anmeldung: 10.05.1995
(73) Patentinhaber: VBS Schweisstechnik GmbH, D-35216 Biedenkopf (DE)
(72) Erfinder: Gaudier, Georg, Dipl.-Ing., D-35216 Biedenkopf-Ludwigshütte (DE)
(74) Vertreter: Olbricht, Karl Heinrich, Dipl.-Phys.

(56) Entgegenhaltungen:
- WO-A-85/05585
- US-A- 2 067 363
- PATENT ABSTRACTS OF JAPAN vol. 9, no. 80 (M-370) (1803) 10. April 1985 & JP-A-59 209 492 (MATSUSHITA DENKI SANGYO K.K.) 28. November 1984

## Beschreibung

Die Erfindung betrifft eine Schweißzange, insbesondere Roboter-Punktschweißzange.

Es ist bekannt, für die Durchführung von Widerstands-Punktschweißaufgaben Roboter als Werkzeugträger bzw. als Schweißzangenträger einzusetzen. Dafür werden Scheren-oder Hubzangen mit schwenkbaren oder geradlinig bewegbaren Elektrodenhaltern verwendet, die durch Pneumatikzylinder, oder auch Schweißzylinder genannt, in die Öffnungs-und in die Arbeitsstellung zur Durchführung des Schweißvorganges bewegt werden. Dabei kommt es darauf an, die Schweißzange bei geöffneten Elektrodenhaltern möglichst schnell an die Schweißstelle heranzuführen und die Elektroden mit gleichgroßer Andruckkraft an die beiden zu verbindenden Werkstücke anzulegen, z.B. mit symmetrischem Elektrodenanpreßdruck von 2,0 bis 18,0 kN bei 10 bar Druckluft.

Hierzu ist nach der DE-A-4 201 925 ein Pneumatik-Zylinder mit Vorhub und Isolierung für das Punktschweißen mit Schiebezangen ein sog. Vorhubzylinder bekannt, bei dem vor dem eigentlichen Arbeitshub ein Vorhub ausgeführt wird, um die Elektroden einfacher an die Stelle zu bringen, an der gepunktet wird. Bei ausgefahrenem Vorhub können die Elektroden genauer positioniert werden. Der Vorhubzylinder besteht aus einem Zylinderblock mit einer stufenförmig abgesetzten Zylinderbohrung, in deren größerem Durchmesser ein Vorhubkolben und in dessen kleineren Durchmesser ein Arbeitskolben auf einer gemeinsamen Kolbenstange angeordnet ist. In der gleichen Art ausgeführte Schweißzylinder sind inzwischen auch für Scherenzangen bekannt geworden. Um eine Schlagwirkung beim Auftreffen der Elektroden zu verhindern, gibt es auch schon Schweißzylinder mit eingebauter Dämpfung, die als Endlagendämpfung etwa 15 mm vor Hubende wirksam wird.

Ein Nachteil dieser bekannten Schweißzylinder mit Vorhubpositionierung und Endlagendämpfung ist darin zu sehen, daß diese konstruktiven Maßnahmen nur in einer bestimmten Stellung oder Lage der Schweißzange, auf die die Ausgleichselemente eingestellt sind, wirken können. Bei der Verwendung von Robotern als Schweißzangenträger ist das aber nicht ausreichend, um die vielseitigen Möglichkeiten der Positionierung des linear geführten und mit Rotationseinheiten ausgestatteten Punktschweißzangen-Trägers auszuschöpfen. Beispielsweise beim Punktschweißen von Autokarosserien sind Schräglagen der Schweißzange notwendig, wenn rationell möglichst alle Punktschweißstellen in einem Arbeitsgang ausgeführt werden sollen. Wird eine Schweißzange in eine Schräglage zur normalerweise horizontalen oder vertikalen Arbeitslage gebracht, so treten seitliche Kraftkomponenten auf, die zu einem unsymmetrischen Angriff der Schweißelektroden führen, wodurch an der Schweißstelle Verformungen entstehen.

Der Erfindung liegt die Aufgabe zugrunde, eine Schweißzange, insbesondere pneumatische Roboter-Punktschweißzange, zu entwickeln, die einen zumindest weitgehend gewichts- bzw. kräftefreien Einsatz ermöglicht.

Hauptmerkmale der Erfindung sind in Anspruch 1 angegeben. Ausgestaltungen sind Gegenstand der Ansprüche 2 bis 4.

Das Prinzip der Erfindung besteht darin, die Schweißzange in Lagen, die von der waagerechten oder senkrechten Normallage durch eine Neigung abweichen, in ihrer Halterung im Schweißzangenträger durch einen Steuerzylinder und eine zugehörige Kolbenstange pneumatisch so abzustützen, daß die Abstützkraft der Gewichtskomponente der Schweißzange entspricht. Dies erlaubt auf überaus einfache Weise einen neigungsabhängigen Massenausgleich und damit eine symmetrische Einwirkung des Elektrodendruckes bei geneigter Schweißzange.

Konstruktiv wird das gemäß Anspruch 2 besonders günstig gelöst, indem die Schweißzange in geneigt zur Normallage liegenden Arbeitsstellungen gegenüber dem Schweißzangenträger durch einen Steuerzylinder an einem Druckpolster in einer Druckkammer und durch ein Druckpolster mit neigungsabhängig geregeltem Druck in einer Ausgleichskammer in Verbindung mit einem Druckkolben und einem Ausgleichskolben an einer am Schweißzangenträger befestigten Kolbenstange, abgestützt ist.

Eine zweckmäßige Ausgestaltung besteht laut Anspruch 3 darin, daß an einem Schweißzangen-Gehäuse ein aus zwei Pneumatikzylindern gebildeter Steuerzylinder auf einer am Schweißzangen-Träger befestigten Kolbenstange axial verschiebbar gelagert ist, wobei die Kolbenstange zwei Kolben aufweist, von denen der vordere Kolben stirnseitig in einer Druckkammer über eine Druckluftleitung mit der aus dem Zangenzylinder im Rückhub kommenden Druckluft beaufschlagt ist, während der hintere Steuerkolben beidseitig in den Ausgleichskammern über je eine Druckluftleitung entsprechend der Neigung der Schweißzange von einem Pendelgewicht mittels eines in einem Schwenklager gelagerten Pendelhebels und einem Querstift über Membrandosen und Schäfte von Rückschlagventilen mit der Druckluft aus der Druckluftleitung vom Arbeitshub des Zangenzylinders beaufschlagbar ist.

Eine Weiterbildung der Erfindung nach Anspruch 4 sieht vor, daß zur Erfassung des Neigungswinkels der Schweißzange ein Potentiometer an einer Schwenkachse des Schweißzangenträgers angeordnet ist, dessen Meßwert über einen Stellmotor den Öffnungswinkel eines Druckminderventiles festlegt, dessen Ausgang in Abhängigkeit vom Meßbereichsteil durch ein Zweiwegemagnetventil auf die beiden Ausgleichskammern stellbar ist.

Wichtige Vorteile der Schweißzange nach der Erfindung bestehen darin, daß die Roboterschweißzange in geöffneter Stellung eine eindeutige Position der zwei Elektroden hat und dadurch ein berührungsloses Anfahren des zu schweißenden Punktes ermöglicht. Wesentlich ist, daß während des Schweißvorganges das Werkstück am Schweißpunkt nicht zusätzlich durch das Zangengewicht belastet wird.

Zum näheren Verständnis wird nachstehend ein Ausführungsbeispiel der Erfindung näher erläutert. Die zugehörige Zeichnung zeigt schematisch das Aufbauprinzip einer Steuerung für Roboter-Punktschweißzangen.

Bei geöffneter Schweißzange ist der dargestellte Zangenzylinder 11 im Rückhub mit Druckluft beaufschlagt und, davon abgezweigt über eine Druckluftleitung 10 und eine Druckkammer 8, die Stirnseite eines vorderen Druckkolbens 12a. Das Druckluftpolster in der Druckkammer 8 legt die Grundstellung zwischen dem Steuerzylinder 11 und der darin geführten Kolbenstange 12 pneumatisch fest, was für die Abstützung der Schweißzange in zwei Richtungen notwendig ist. Die Kolbenstange 12, auf der sich der vordere Druckkolben 12a und der hintere Ausgleichskolben 12b befinden, sitzt starr an einem Schweißzangen-Träger 14; der Steuerzylinder 11 ist am Schweißzangen-Gehäuse befestigt. Das Zangengehäuse steht daher anfangs am Anschlag, wo die eindeutige Position der zwei Elektroden in der geöffneten Stellung vorhanden ist, und der Schweißpunkt kann angefahren werden. Zwei Ausgleichskammern 6 und 7 werden nur im Arbeitshub belüftet, wobei es von der Neigung der Schweißzange abhängt, mit welchem Druck die jeweilige Ausgleichskammer beaufschlagt wird.

Die Druckregeleinrichtung besteht aus zwei Membrandosen 3a, 3b mit je einem in die Schließstellung federnden Rückschlagventil 1a, 1b, deren Ventilschäfte 2a bzw. 2b an der Membran anliegen. Die Druckluft zu den Rückschlagventilen wird vom Arbeitshub des Zangenzylinders abgezweigt und über eine geteilte Druckluftleitung 9 beiden Rückschlagventilen 1a, 1b zugeführt.

Zur Betätigung der Rückschlagventile 1a, 1b dient der Querstift 13a eines in einem Schwenklager 5 pendelnd gelagerten Pendelhebels 13, der mit einem verschieb- und feststellbaren Pendelgewicht 4 ausgestattet ist. Bei Schräglagen der Schweißzange kommt der Pendelhebel 13 mit dem Pendelgewicht 4 in eine der strichpunktiert angedeuteten Lagen 4a oder 4b. Im Falle der Lage 4a des Pendelhebels 13 drückt der Querstift 13a auf die Membran der Membrandose 3a, biegt diese nach innen und öffnet über den Ventilschaft 2a das Rückschlagventil 1a, so daß die Druckluft aus der Druckluftleitung 9 über die Membrandose 3a und die Druckluftsteuerleitung 15a in die Ausgleichskammer 7 strömt. Wenn der Druck auf der Membran der Membrandose 3a die Hebelkraft des am Pendelhebel 13 befestigten Querstiftes 13a erreicht hat, schließt sich das Rückschlagventil und die Druckluftzufuhr wird unterbrochen.

Die Einstellung des Pendelgewichtes 4 erfolgt in einer Extremposition der Schweißzange (stehend oder hängend). Dazu wird das Pendelgewicht 4 auf dem Pendelhebel 13 entsprechend dem Gewicht der beweglichen Teile der Roboterschweißzange verschoben und in der Ausgleichsstellung festgestellt. In den Zwischenlagen regelt sich der für den Gewichtsausgleich erforderliche Druck in der Ausgleichkammer 7 selbständig.

Im bevorzugten Ausführungsbeispiel wird die Abstützkraft von einem mechanischen Pendelhebel 13 über eine Membrandose 3a oder 3b wirksam. Man erkennt, daß sich nach Kenntnis dieses mechanischen Prinzips auch elektrotechnische Lösungen anbieten. Ein Beispiel ist die Erfassung des Neigungswinkels mit Hilfe eines Potentiometers und die Übertragung des Meßwertes durch einen Stellmotor auf den Öffnungswinkel eines Druckminderventiles, dessen Ausgang auf die beiden Ausgleichskammern 6, 7 mit einem Zweiwegemagnetventil stellbar ist. Eine solche Anordnung zeichnet sich durch besonders kleine Baugröße und zusätzliche Möglichkeiten der elektrischen bzw. elektronischen Steuerung aus.

Die Erfindung ist nicht auf das beschriebene Ausführungsbeispiel beschränkt, vielmehr in vielfältiger Weise anwendbar. Man sieht jedoch, daß insbesondere für pneumatische Roboter-Punktschweißzangen die Steuerung so ausgebildet ist, daß ein Schweißzangen-Träger 14 samt Steuerzylinder 11 und zugehöriger Kolbenstange 12 die Schweißzange in Schräglagen mit einer Stützkraft hält, die der Gewichtskomponente der Schweißzange entspricht. Bevorzugt ist diese gegenüber dem Schweißzangen-Träger 14 in zur Normallage geneigter Arbeitsstellung an einem Druckpolster in einer Druckkammer 8 und durch ein Druckpolster mit neigungsabhängig geregeltem Druck in einer Ausgleichskammer 6 bzw. 7 in Verbindung mit einem Druckkolben 12a und einem Ausgleichskolben 12b an der am Schweißzangen-Träger 14 befestigten Kolbenstange 12 abgestützt.

### Bezugszeichen-Liste

- 1a; 1b: Rückschlagventil
- 2a; 2b: Ventilschaft
- 3a; 3b: Membrandose
- 4: Pendelgewicht (in Normallage)
- 4a; 4b: Pendelgewicht (in Schräglage)
- 5: Schwenklager
- 6: Ausgleichskammer (rechts)
- 7: Ausgleichskammer (links)
- 8: Druckkammer (vom Rückhub)
- 9: Druckluftleitung (vom Arbeitshub)
- 10: Druckluftleitung (vom Rückhub)
- 11: Steuerzylinder
- 12: Kolbenstange
- 12a: vorderer Druckkolben
- 12b: hinterer Ausgleichskolben
- 13: Pendelhebel
- 13a: Querstift
- 14a: Schweißzangen-Träger
- 15a; 15b: Druckluftsteuerleitung

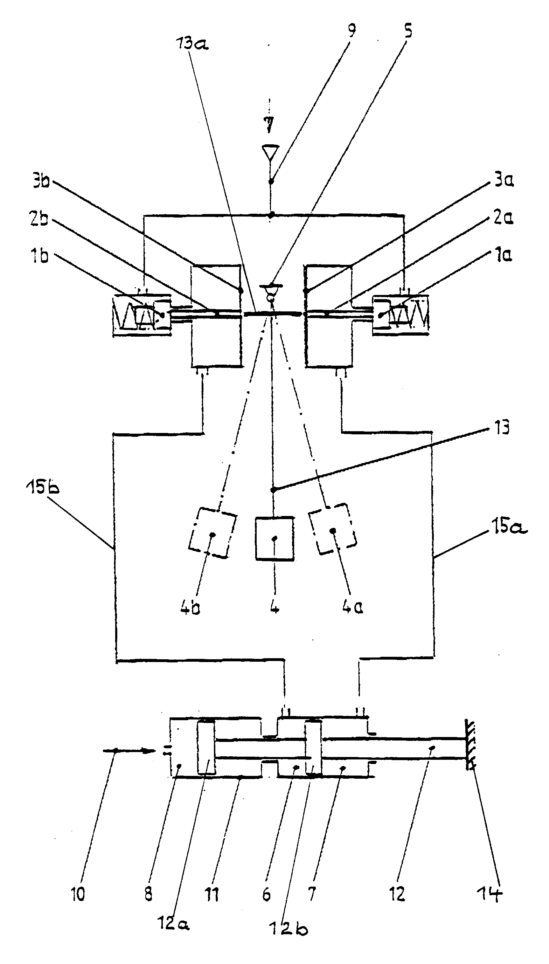

## Patentansprüche

1. Schweißzange mit einer Schweißzangen-Steuerung, einer insbesondere pneumatische Roboter-Punktschweißzange, wobei die Schweißzange in ihrer Halterung in einem Schweißzangen-Träger (14) von einem Steuerzylinder (11) und einer zugehörigen Kolbenstange (12) derart abgestützt ist, daß die Stützkraft in Lagen, die von einer waagrechten oder senkrechten Normallage durch eine Neigung abweichen, der Gewichtskomponente der Schweißzange entspricht.

2. Schweißzange nach Anspruch 1, dadurch **gekennzeichnet**, daß die Schweißzange gegenüber dem Schweißzangen-Träger (14) in zur Normallage geneigter Arbeitsstellung durch ein Druckpolster in einer Druckkammer (8) und durch ein Druckpolster mit neigungsabhängig geregeltem Druck in einer Ausgleichskammer (6 bzw. 7) in Verbindung mit einem Druckkolben (12a) und einem Ausgleichskolben (12b) an der am Schweißzangen-Träger (14) befestigten Kolbenstange (12) abgestützt ist.

3. Schweißzange nach Anspruch 1 oder 2, dadurch **gekennzeichnet**, daß an einem Schweißzangengehäuse ein aus zwei Pneumatikzylindern (11a, 11b) gebildeter Steuerzylinder (11) auf einer am Schweißzangen-Träger (14) befestigten Kolbenstange (12) axial verschiebbar gelagert ist, wobei letztere zwei Kolben (12a, 12b) aufweist, von denen ein vorderer Druckkolben (12a) stirnseitig in einer Druckkammer (8) über eine Druckluftleitung (10) mit der aus dem Zangenzylinder im Rückhub kommenden Druckluft beaufschlagt ist, während ein hinterer Steuerkolben (12b) beidseitig in den Ausgleichskammern (6, 7) über je eine Druckluftleitung (15a, 15b) entsprechend der Neigung der Schweißzange von einem Pendelgewicht (4) mittels eines in einem Schwenklager (5) gelagerten Pendelhebels (13) und einem Querstift (13a) über Membrandosen (3a, 3b) und Schäfte (2a, 2b) von Rückschlagventilen (1a, 1b) mit der Druckluft aus der Druckluftleitung (9) vom Arbeitshub des Zangenzylinders beaufschlagbar ist.

4. Schweißzange nach einem der Ansprüche 1 bis 3, dadurch **gekennzeichnet**, daß zur Erfassung des Neigungswinkels der Schweißzange ein Potentiometer an einer Schwenkachse des Schweißzangen-Trägers (14) angeordnet ist, dessen Meßwert über einen Stellmotor den Öffnungswinkel eines Druckminderventiles festlegt, dessen Ausgang in Abhängigkeit vom Meßbereichsteil durch ein Zweiwegemagnetventil auf die beiden Ausgleichskammern (6, 7) stellbar ist.

## Claims

1. Welding gun comprising welding gun control means, in particular pneumatic robot-type spotwelder, the welding gun being supported in its fixture at a welding gun bracket (14) by means of a controlling pressure cylinder (11) and of an associated piston rod (12) in such manner that the supporting force corresponds to the weight force component of the welding gun in positions which deviate by inclination from a standard horizontal or vertical position.

2. Welding gun according to claim 1, wherein in a working position inclined relative to the standard position, the welding gun is propped against the welding gun bracket (14) by a pressure cushion in a pressure chamber (8) and by a pressure cushion in a balancing chamber (6 or 7) under inclinationcontrolled pressure, in combination with a pressure piston (12a) and a balancing piston (12b).

3. Welding gun according to claim 1 or claim 2, wherein at a welding gun casing, a controlling cylinder (11) made up of to pneumatic cylinders (11a, 11b) is axially shiftable along a piston rod (12) attached to the welding gun bracket (14), the piston rod (12) comprising two pistons (12a, 12b) of which a face of a primary pressure piston (12a) in a pressure chamber (8) receives compressed air fed from a compressed air line (10) during the return stroke of the welding gun cylinder, while either face of a secondary pressure piston (12b) in balancing chambers (6, 7) receives compressed air through checkvalves (1a, 1b) from an air pressure line (9) during the power stroke of the welding gun cylinder via compressed air lines (15a, 15b) loaded according to the welding gun inclination under control of a pendulum weight (4) by means of a pendulum lever (13) borne in a pivot bearing (5) and of a transverse pin (13a), diaphragm boxes (3a, 3b) and shafts (2a, 2b).

4. Welding gun according to any one of claims 1 to 3, wherein for detecting the welding gun's angle of inclination, a potentiometer at a pivot axis of the welding gun bracket (14) is arranged to determine by its measuring value, via a servomotor, the opening angle of a reducing valve whose outlet is adjustable to the two balancing chambers (6, 7) through a two-way magnetic valve, depending on the measuring range section.

## Revendications

1. Pince de soudage avec réglage, notamment pince de soudage d'un robot pneumatique de soudage par points, soutenue dans sa fixation sur le support (14) de la pince de soudage par un cylindre de réglage (11) et par une tige de piston (12) correspondante, de manière à ce que la force d'appui, dans des positions se distinguant de la position normale horizontale ou verticale par une inclinaison, corresponde à la composante pondérale de la pince de soudage.

2. Pince de soudage selon la revendication 1, caractérisée en ce que par rapport au support (14) de la pince de soudage, dans une position de travail inclinée par rapport à la position normale, la pince de soudage reçoive, d'un coussin de pression dans une chambre de compression (8) et d'un coussin de pression dans une chambre de compensation (6 ou 7) dont la pression est réglée en fonction de l'inclinaison, en combinaison avec un piston de pression (12a) et un piston de compensation (12b), un appui sur la tige de piston (12) fixée sur le support (14) de la pince de soudage.

3. Pince de soudage selon la revendication 1 ou 2, caractérisée en ce que sur un boîtier de la pince de soudage, un cylindre de réglage (11) mobile en direction axiale et formé de deux cylindres pneumatiques (11a, 11b) soit logé sur une tige de piston (12) fixée sur le support (14) de la pince de soudage, cette tige de piston ayant deux pistons (12a, 12b), dont un piston avant de pression (12a) est alimenté frontalement dans une chambre de compression (8) avec de l'air comprimé provenant du cylindre de la pince en mouvement de retour et passant par une conduite d'air comprimé (10), alors qu'un piston arrière de commande (12b) peut être alimenté des deux côtés dans les chambres de compensation (6,7) par des conduites d'air comprimé respectives (15a, 15b) avec de l'air comprimé provenant du mouvement de travail du cylindre de la pince et passant par la conduite d'air comprimé (9), cette alimentation étant réglée en fonction de l'inclinaison de la pince de soudage par un poids de pendule (4) moyennant une tige de pendule (13) logée dans un palier pivotant (5) et une cheville transversale (13a), en passant par des boîtes à membrane (3a, 3b) et des fûts (2a, 2b) des soupapes de non-retour (1a, 1b).

4. Pince de soudage selon l'une des revendications 1 à 3, caractérisée en ce que pour la saisie de l'angle d'inclinaison de la pince de soudage, un potentiomètre soit disposé sur un axe pivotant du support (14) de la pince de soudage, dont la valeur mesurée détermine, moyennant un moteur de réglage, l'angle d'ouverture d'une soupape de réduction de la compression, dont la sortie peut être réglée par une électrovanne à deux conduites sur les deux chambres de compensation (6, 7), en fonction du domaine des valeurs mesurées.
